Europäisches Patentamt

European Patent Office

Office européen des brevets

(11) Publication number: **0 061 257**
A1

(12) **EUROPEAN PATENT APPLICATION**

(21) Application number: **82301221.6**

(22) Date of filing: **10.03.82**

(51) Int. Cl.³: **E 04 G 7/30**

(30) Priority: **19.03.81 GB 8108676**

(43) Date of publication of application:
**29.09.82 Bulletin 82/39**

(84) Designated Contracting States:
**AT BE CH DE FR GB IT LI LU NL SE**

(71) Applicant: **EIGERTOWER LIMITED**
**Second Avenue Deeside Industrial Park**
**Sealand Deeside, Clwyd. CH5 2LX(GB)**

(72) Inventor: **Butt, Colin**
**Monor Lane**
**Hawarden Clwyd Wales(GB)**

(74) Representative: **Wilson, Nicholas Martin et al,**
**WITHERS & ROGERS 4 Dyer's Buildings Holborn**
**London. EC1N 2JT(GB)**

(54) Scaffold locking hook.

(57) A scaffold locking hook (1) has a body (2) with a hooked portion (4) for receiving a scaffold pole and a locking device (8) movable between a locked and a release position. The locking device (8) consists of an actuating lever (10) pivoted to the body (2) and a locking lever (12) pivoted to the actuating lever, a torsion spring (20) at the actuating lever pivot point (11) producing a toggle action so that in the locked position the locking lever (12) is urged towards the hooked portion (4) whereas in the release position the locking lever (12) is urged away from the hooked portion (4).

FIG.1.

EP 0 061 257 A1

## "SCAFFOLD LOCKING HOOK"

This invention relates to a scaffold locking hook and to a scaffold pole including such a locking hook.

Scaffold locking hooks per se are well known from prior U.K. Patent Specifications 1118029, 1176234 and 1504748 and are used to facilitate scaffold poles being secured together without difficulty.

U.K. Patent Specification 1118029, for example, discloses a scaffold locking hook having a hooked body and an arcuate slidable locking member which is urged into a locked position over the opening in the body by means of a helical coil spring. In the locked position the locking member is held against the pivotal movement necessary to effect its release by interengagement between locking surfaces on the locking member and the body of the hook. Release is only possible by first effecting a sliding movment so that the locking member can pivot into its unlocked position.

U.K. Patent Specification 1176234 discloses a self-locking hooking device having a hooked body and a locking device comprising two pivoted locking jaws spaced apart and carrying between them a biassed, slidable, trigger member. The locking device is biassed into the locking position and, in that position, simple release is again prevented by interengagement between locking surfaces on the trigger member and the hooked body. In order to release the locking device and move it away from the opening in the body the trigger member first has to undergo a sliding movement to release the interengaging surfaces before the locking jaws are free to pivot.

U.K. Patent Specification 1504748 discloses a locking hook for scaffolding comprising a hooked body, a pivoted locking segment movable between locking and non-locking positions and a manually-operable, pivoted trigger latch for releasing or holding the locking segment respectively from or in its locking position.  The trigger latch is biassed into a position in which it engages with the locking segment holding the latter in its locking position.  The locking segment on the other hand is biassed into its non-locking position so that, on release of the trigger latch, the locking segment moves about its pivot aiding separation of the locking hook from the engaged scaffolding.

Whilst the known devices work satisfactorily an object of the present invention is to provide an improved locking device of simple construction with the minimum of parts making it less susceptible to failure.

According to the present invention there is provided a scaffold locking hook comprising a body having a hooked portion for receiving a scaffold pole in the opening defined by the hooked portion, and a locking device movable between a locked and a release position, the locking device comprising a toggle mechanism.

The locking device preferably comprises an actuating lever pivoted to the body, a locking lever pivoted to the actuating lever, and biassing means biassing the locking lever either into the locked or the release position. The locking lever is suitably provided with a guide slot which cooperates with guide means on the body to guide the locking lever between its locked and release positions.

The end of the locking lever preferably includes an arcuate contour for cooperation with a scaffold pole.

Although the invention is primarily concerned with a scaffold locking hook which may be fitted on to the end of a scaffold pole by means of a tubular end section, the locking hook may be formed as an integral part of a scaffold pole and accordingly the present invention includes a scaffold pole having a locking hook on one end.

The invention will now be described by way of example with reference to the accompanying drawings in which:

Figure 1 is a longitudinal cross-section of a preferred scaffold locking hook in accordance with the present invention with the locking lever in the locked position;

Figure 2 is a longitudinal cross-section of the scaffold locking hook corresponding to Figure 1 with the locking lever in the release position;

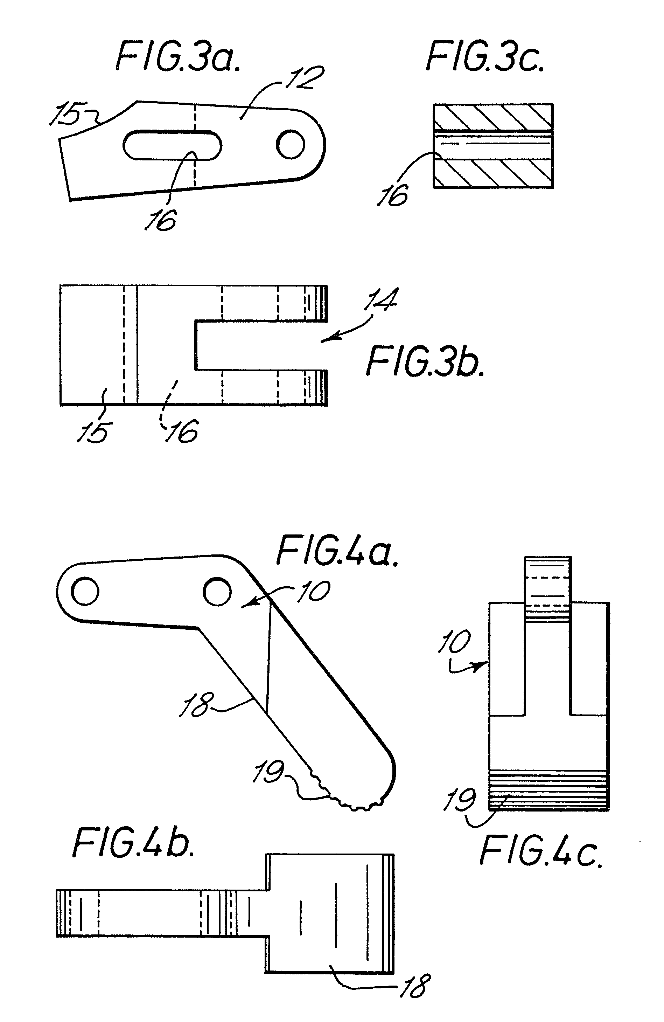

Figures 3a, b and c are a side elevation, plan view and cross-section respectively of the locking lever, and

Figure 4a, b and c are a side elevation, plan view and end view respectively of the actuating lever.

In the drawings a scaffold locking hook 1 comprises a body 2 having a tubular section 3 at one end for connection to an end of a scaffold pole (not shown) and a hooked section 4 at the other end. The hooked section 4 has an arcuate inner surface 5 defining an opening 6 for receiving a scaffold pole 7.

In order to retain a scaffold pole locked in position in the opening 6 a locking device 8 is provided in a central slot 9 in the body which opens into the opening 6. The locking device 8 includes an actuating lever 10 pivoted on the body 2 at pin 11 and a locking lever 12 pivoted on the actuating lever 10 at 13.

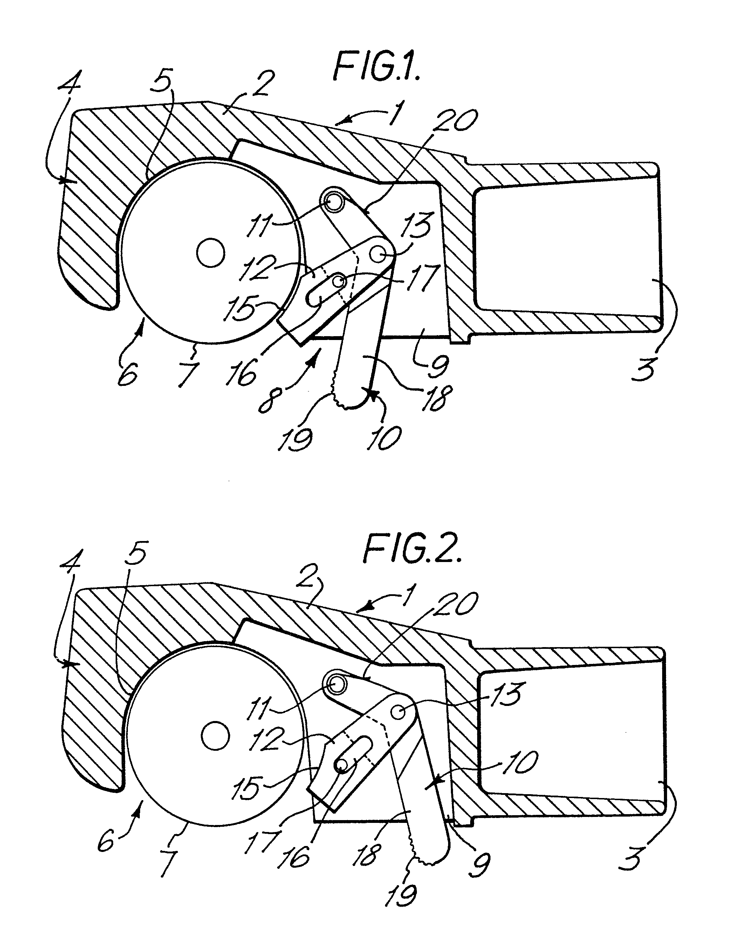

The locking lever 12 is movable from a locked to a release position by means of the actuating lever 10 and is bifurcated at its pivoted end 14; the actuating lever 10 being disposed between the separate forks of the end 14. The other end of the locking lever 12 comprises an arcuate locking surface 15 which, in the locked position, engages and retains a scaffold pole in the opening 6. Intermediate the ends of the locking lever there is an elongate slot 16 which receives a pin 17 secured to the body 2 of the locking hook thereby guiding the locking lever between its locked and release positions shown in Figures 1 and 2 respectively. The slot 16 tapers away from the bifurcated end 14 so as to accommodate the slight angular movement that the locking lever 12 has to undergo in movement between its two positions.

Movement of the locking lever 12 is effected by manipulation of an enlarged trigger portion 18 of the actuating lever 10, which protrudes from the locking hook 1. The trigger portion 18, as shown, is provided with transverse ribs 19 to facilitate the finger grip.

In order to retain the locking lever 12 in the locked or release position a torsion spring 20 is provided about the pivot pin 11 which acts on the actuating lever 10. Thus, in use, the torsion spring 20 about the pivot pin 11 produces a toggle action so that in the locked position the locking lever 12 is urged in towards the hook opening 6 whereas in the release position the locking lever 12 is urged away from the hook opening 6.

The locking hook may be made of any suitable materia, e.g. metallic material.

CLAIMS

1. A scaffold locking hook comprising a body (2) having a hooked portion (4) for receiving a scaffold pole (7) in the opening (6) defined by the hooked portion, and a locking device (8) movable between a locked and a release position, characterised in that the locking device (8) comprises a toggle mechanism (10, 12).

2. A scaffold locking hook according to claim 1 characterised without the locking device toggle mechanism comprises an actuating lever (10) pivoted (11) to the body (2), a locking lever (12) pivoted (13) to the actuating lever, and biassing means (20) biassing the locking lever (12) either into the locked or the release position.

3. A scaffold locking hook according to claim 2 characterised in that the locking lever (12) includes a guide slot (16) which cooperates with guide means (17) on the body (2) to guide the locking lever (12) between its locked and release position.

4. A scaffold locking hook according to claim 2 or 3 characterised in that the end of the locking lever (12) remote from its pivot point (13) is of arcuate contour (15) providing a locking surface for cooperation with a scaffold pole (7).

5.      A scaffold locking hook according to claim 2, 3 or 4 characterised in that the biassing means (20) comprises a torsion spring at the actuating lever pivot point (11) acting on the actuating lever (10) and biassing the locking lever (12) either into the locked or the release position.

6.      A scaffold locking hook according to any one of claims 2 to 5 characterised in that the pivoted end (14) of the locking lever (12) is bifurcated and the actuating lever (10) is received therebetween.

7.      A scaffold locking hook according to claim 3 characterised in that the guide slot (16) tapers away from the pivoted end (14) of the locking lever (12) so as to accommodate the slight angular movement that the locking lever (12) has to undergo during movement between its locked and release positions.

8.      A scaffold locking hook according to any one of claims 2 to 7 characterised in that the actuating lever (10) has an enlarged trigger portion (18) to facilitate manipulation thereof.

9.      A scaffold pole including a scaffold locking hook according to any one of claims 1 to 8.

FIG.1.

FIG.2.

FIG.3a.

FIG.3c.

15    12

16    16

FIG.3b.

14

15    16

FIG.4a.

10

18

19

10

19

FIG.4b.

FIG.4c.

18

European Patent
Office

**EUROPEAN SEARCH REPORT**

**0061257**

Application number

EP 82 30 1221

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 029 246 (HARRIS & SHELDON)<br>* page 1, lines 60-90; page 2, lines 1-44; figures 1 to 6 * | 1 | E 04 G 7/30 |
| A | US-A-2 997 767 (GROVER)<br>* page 1, column 1, lines 54-72; column 2, lines 1-42; figures 1,2 * | 1,4,5 | |
| A,D | GB-A-1 504 748 (ACCESS PLANT)<br>* claims; figures * | 1,2 | |

---

|  |
|---|
| TECHNICAL FIELDS SEARCHED (Int. Cl. 3) |
| E 04 G<br>F 16 B |

The present search report has been drawn up for all claims

| Place of search<br>THE HAGUE | Date of completion of the search<br>17-06-1982 | Examiner<br>VIJVERMAN W.C. |
|---|---|---|